# EUROPÄISCHE PATENTANMELDUNG

(11) **EP 3 240 234 A1**
(43) Veröffentlichungstag der Anmeldung: **01.11.2017**
(21) Anmeldenummer: 16166831.4
(22) Anmeldetag: 25.04.2016
(51) Int. Cl.: H04L 12/24, H04L 12/46, H04L 29/06

(54) **VERFAHREN ZUR KONFIGURATION EINER TUNNEL-VERBINDUNG FÜR EIN AUTOMATISIERUNGS-NETZWERK**

(71) Anmelder: Siemens Aktiengesellschaft, 80333 München (DE)
(72) Erfinder: Milovanovic, Igor, 90491 Nürnberg (DE); Riedl, Wolfgang, 90443 Nürnberg (DE)

(57) **Zusammenfassung**

Engineering, Konfiguration und Inbetriebnahme von Automatisierungsgeräten wird normalerweise mit Hilfe von PC-basierter Engineering-Software durchgeführt. Die Kommunikation mit dem Automatisierungsgerät erfolgt üblicherweise über ein proprietäres Kommunikationsprotokoll. Das proprietäre zugrundeliegende Kommunikationsnetz ist dabei im Normalfall von den anderen Netzen getrennt und von entsprechenden Firewalls gesichert sind.

Der Computer, auf dem die PC-basierte Engineering-Software läuft, muss an das Automatisierungsnetzwerk angeschlossen werden. Problematisch kann dies in einer Umgebung werden in der der Datenaustausch mittels Cloud Computing unterstützt wird. Dass die PC-basierte Engineering-Software sich mit dem Automatisierungsgerät mit Hilfe der Automatisierung Protokoll verbinden muss, verkompliziert die Installation der Engineering-Software.

In der beschriebenen Lösung wird die Software für die Tunnel-Kommunikation mit einer Auto-Konfigurations-Funktion erweitert. Diese versucht, heuristisch die Adresse des Kommunikationsendpunkt für das Tunneln der Kommunikation des Automatisierungsprotokolls zu bestimmen.

## Beschreibung

Das Engineering, die Konfiguration und Inbetriebnahme von Automatisierungsgeräten wie eine speicherprogrammierbare Steuerung (SPS; auf englisch PLC, Programmable Logic Controller) oder einer Benutzerschnittstelle (Mensch-Maschine-Schnittstelle, auch HMI Human Machine Interface) wird normalerweise mit Hilfe von PC-basierter Engineering-Software durchgeführt. Die Kommunikation zwischen dem Rechner mit installierter Engineering Software und dem Automatisierungsgerät erfolgt, beispielsweise bei der Simatic S7, üblicherweise über ein proprietäres Kommunikationsprotokoll.

Das proprietäre zugrundeliegende Kommunikationsnetz, welches die Automatisierungsgeräte miteinander verbindet (Automatisierungsnetzwerk) ist dabei im Normalfall von den anderen Netzen getrennt, insbesondere von externen Netzen. Es handelt sich um eigenständige (sogenannte "Stand-Alone") Netze, die mit Hilfe von entsprechenden geeigneten Netzelementen (Firewalls) gesichert sind.

Der Computer, auf dem die PC-basierte Engineering-Software läuft, muss an das Automatisierungsnetzwerk angeschlossen werden, beispielsweise über Ethernet, Bus oder USB. In klassischen Szenarien, wenn der Ingenieur die technische Planung auf dem eigenen Computer durchführt mit der dort installierten Engineering-Software, ist dies kein Problem. Anders sieht dies in einer Umgebungen aus in der Datenaustausch mittels Cloud Computing unterstützt wird. Dass die PC-basierte Engineering-Software sich mit dem Automatisierungsgerät mit Hilfe der Automatisierung Protokoll verbinden muss, verkompliziert die Installation der Engineering-Software.

Unter Cloud Computing versteht man dabei die Ausführung von Programmen, die nicht auf dem lokalen Rechner installiert sind, sondern auf einem anderen Rechner, der aus der Ferne aufgerufen wird (beispielsweise über das Internet). IT-Infrastrukturen (z. B. Rechenkapazität, Datenspeicher, Netzkapazitäten oder auch fertige Software) werden über ein Netz zur Verfügung gestellt, ohne dass diese auf dem lokalen Rechner installiert sein müssen.
Angebot und Nutzung dieser Dienstleistungen erfolgen dabei ausschließlich über technische Schnittstellen und Protokolle sowie über Browser. Die Spannweite der im Rahmen des Cloud Computings angebotenen Dienstleistungen umfasst das gesamte Spektrum der Informationstechnik und beinhaltet unter anderem die Infrastruktur (z. B. Rechenleistung, Speicherplatz), Plattformen und Software.

Um das Problem zu umgehen, dass die in der Cloud-Umgebung installiere Automatisierungssoftware die Automatisierungsgeräte, die mit dem Internet und mit dem PC verbunden sind, nicht ansprechen kann, wird beispielsweise die Engineering-Software mit einer Netzwerk-Tunneling-Software erweitert.

Als Tunnel bzw. Tunneling bezeichnet man in einem Netz die Konvertierung und Übertragung eines Kommunikationsprotokolls, das für den Transport in ein anderes Kommunikationsprotokoll eingebettet wird. Vor und hinter den Tunnelpartnern wird somit das ursprüngliche Protokoll "gesprochen", während zwischen den Tunnelpartnern ein anderes Protokoll verwendet wird, das einer anderen Art der Kommunikation dient und dennoch die Daten des ursprünglichen Protokolls transportiert. Dafür wird die Tunnelsoftware auf beiden Seiten des Tunnels benötigt. Nachdem sie die ursprünglichen Kommunikationsdaten in ein anderes Protokoll eingebettet hat, muss die Software auf der jeweils anderen Seite des Tunnels die Daten wieder extrahieren und weiterreichen.

Das Automatisierungsprotokoll wird über gemeinsame Internet-Protokolle (zum Beispiel TCP oder HTTP) derart getunnelt. Der Engineering PC wirkt als Netzwerk-Bridge, und verbindet die Automatisierungssoftware mit den Automatisierungsgeräten.

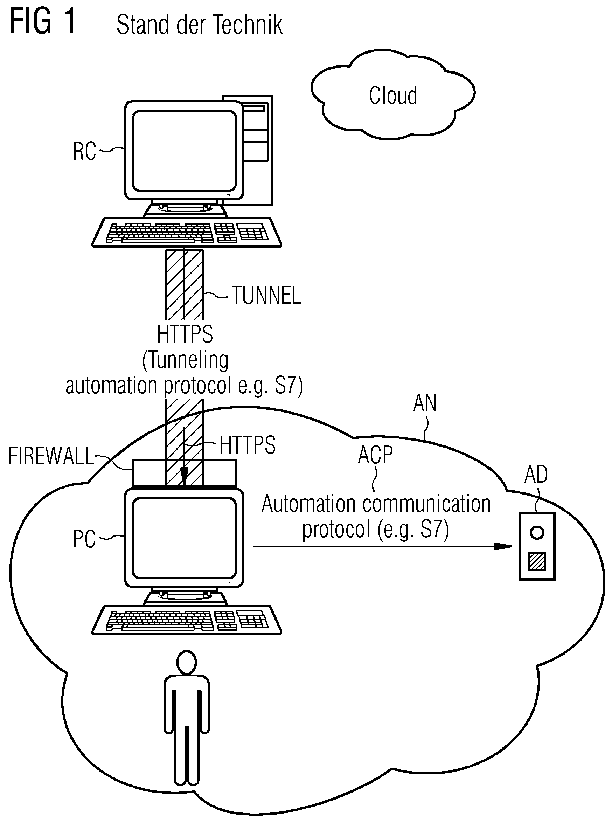

Eine entsprechende Lösung ist beispielhaft in der Figur 1 dargestellt. Ein Remote Computer RC in der Cloud wird, beispielsweise über das Protokoll https, mit dem Engineering PC, PC verbunden, der wiederum über ein übliches Automatisierungs-Kommunikationsprotokoll, ACP mit dem Automatisierungsgerät, AD spricht.

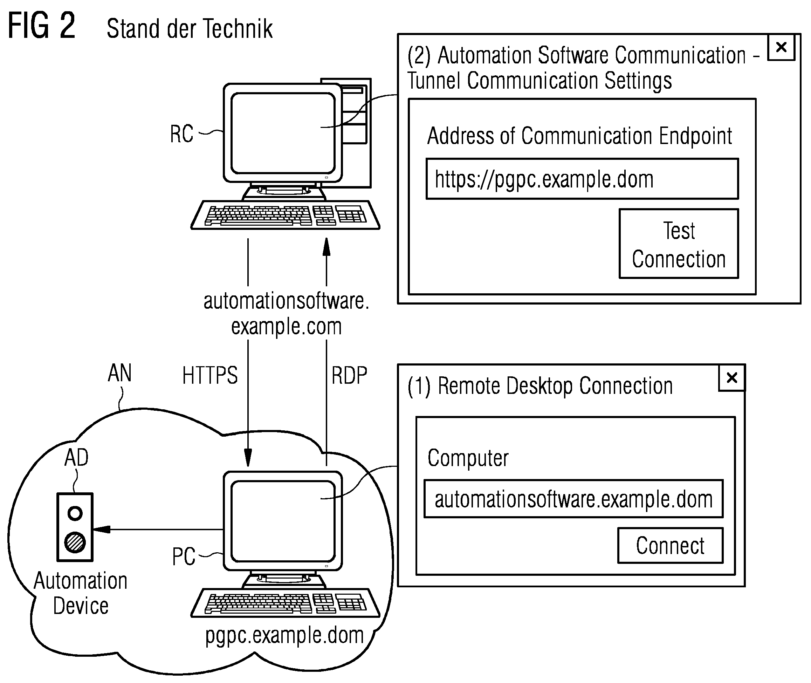

Die Netzwerk-Tunneling-Software für Automatisierungsprotokolle muss konfiguriert werden bevor sie verwendet werden kann. Hierfür werden nach dem Stand der Technik die folgenden Schritte ausgeführt, um eine Verbindung zwischen der in der Cloud installierten PC-basierten Engineering-Software und die Automatisierungsgerät zu etablieren:
0. Aktivieren des Kommunikationsendpunktes der Tunnel-Kommunikation zum Automatisierungsgerät (in der Figur 2 dargestellt unter dem HTTPS-Endpunkt PC)
1. Aufbau einer Verbindung über eine gemeinsame (zwischen Remote PC, RC und Engineering PC, PC) Remote-Desktop-Lösung (beispielsweise Microsoft RDP, VNC, Citrix) zu dem Computer, PC, auf dem die PC-basierte Engineering-Software ausgeführt wird. Der Computer RC wird in der Regel als eine virtuelle Maschine in einer Cloud-Umgebung eingesetzt. In dem Beispiel in Figur 2 hat dieser Computer die Adresse *automationsoftware.example.dom.*
2. Eingabe der Adresse des Kommunikationsendpunktes auf dem Computer für das PC-basierte Software-Engineering, RC. Im Beispiel in Figur 2 lautet die Adresse *https:*//*pgpc.example.dom.*

Es ist Aufgabe der Erfindung, ein Verfahren anzugeben mit dem der Konfigurationsaufwand in der oben beschriebenen Rechnerkonstellation zwischen einem erheblich vereinfacht werden kann.

Die Aufgabe wird gelöst durch ein Verfahren mit den Merkmalen des Patentanspruch 1.

Das Verfahren wird verwendet zum Konfigurieren einer Kommunikation zwischen einem ersten Computer mit einer Engineering-Software und einem zweiten Computer, der in einem proprietären Automatisierungsnetzwerk angeschlossen ist, wobei der erste Computer in einer Cloud-Umgebung läuft und wobei die Kommunikation zwischen dem ersten und dem zweiten Computer mittels eines Tunnel-Protokolls erfolgt, und die Konfiguration der Tunnelverbindung automatisiert mittels heuristisch ermittelten Informationen konfiguriert wird.

Die Software für die Tunnel-Kommunikation kann mit einer Auto-Konfigurations-Funktion erweitert werden. Diese versucht, heuristisch die Adresse des Kommunikationsendpunkt für das Tunneln der Kommunikation des Automatisierungsprotokolls zu bestimmen. Wenn das Verfahren erfolgreich ist, muss die Adresse nicht manuell eingegeben werden.

Vorteilhafte Ausgestaltungen sind in den Unteransprüchen beschrieben.

Das Verfahren verwendet die Tatsache, dass die PCs bereits über eine Art von Computer Remote-Desktop-Software (RDP) miteinander verbunden sind, die die PC-basierte Engineering-Software und dass jedes PC-Betriebssystem mit Netzwerkfunktionen eine interne Liste von Netzwerkverbindungen verwaltet, die ausgelesen werden können.
Figuren 1 und 2 zeigen den Stand der Technik, den beispielhaften Aufbau der beteiligten Netzelemente sowie die Konfigurations-Masken.

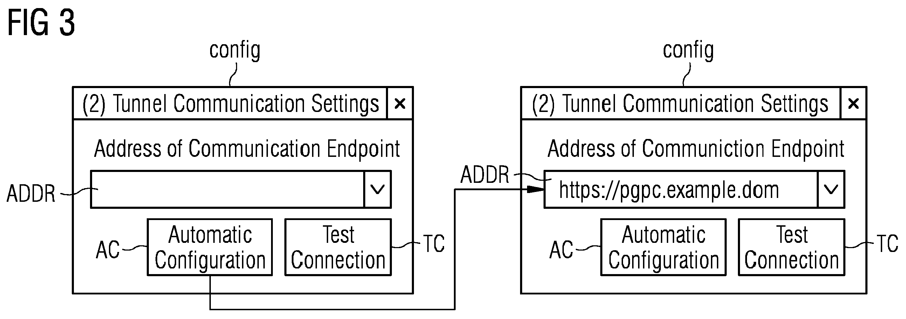

Figur 3 Heuristische Methode zur Konfiguration der Netzwerksoftware Tunnel für Automatisierungsprotokolle
Figur 4 zeigt ein Funktionsablauf-Diagramm für den SCAN Prozeß und
Figur 5 ein Funktionsablauf-Diagramm für den LEARN Prozeß.

Das vorgeschlagene Verfahren umfasst in einer vorteilhaften Ausgestaltung einen Scan-Vorgang, der jedes Mal ausgeführt wird wenn der Benutzer versucht, die Netzwerk-Tunneling-Software automatisch zu konfigurieren. Weiterhin umfasst es ein Learn-Vorgang, die jedesmal durchgeführt wird wenn die Software eine manuell konfigurierte Tunnelverbindung zum Automatisierungsgerät erstellt.

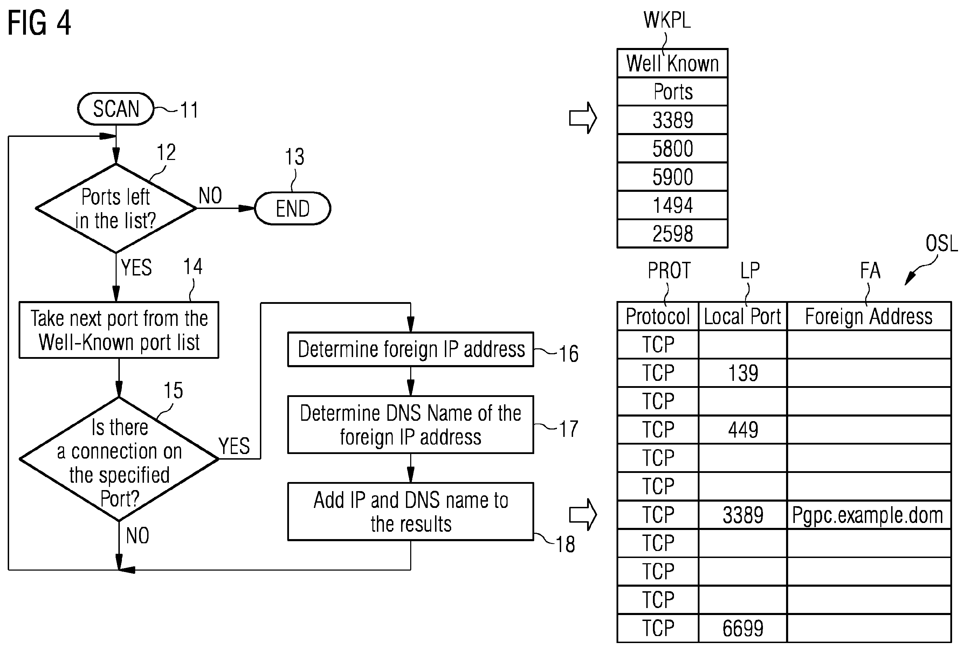

Die Figur 4 zeigt nun den SCAN-Prozess 11:
Die Software erstellt und pflegt eine Liste der Ports, die initial mit bekannten Ports vorbefüllt wird, WKPL - Well Known Port List WKPL. Diese sind durch die gemeinsame Remote-Desktop-Software belegt, im Beispiel wird Portnummer 3389 verwendet für Microsoft RDP, 5800, 5900 für VNC, 1494 und 2598 für Citrix.

Für jeden Port 12 in der Liste werden folgende Schritte durchgeführt:
Wenn eine Verbindung auf dem aktuellen Port existiert, 15:
   - Ermitteln Sie die IP-Adresse des Computers der an den Port angeschlossen ist (im Beispiel Port 3389), 16
   - Bestimmen Sie den DNS-Namen für die IP-Adresse (im Beispiel: Pgpc.example.dom), 17
   - Fügen Sie beide zu den Ergebnissen in die Liste, 18
Wenn es keine Ergebnisse gibt, kann die Adresse gegebenenfalls manuell konfiguriert werden. 13

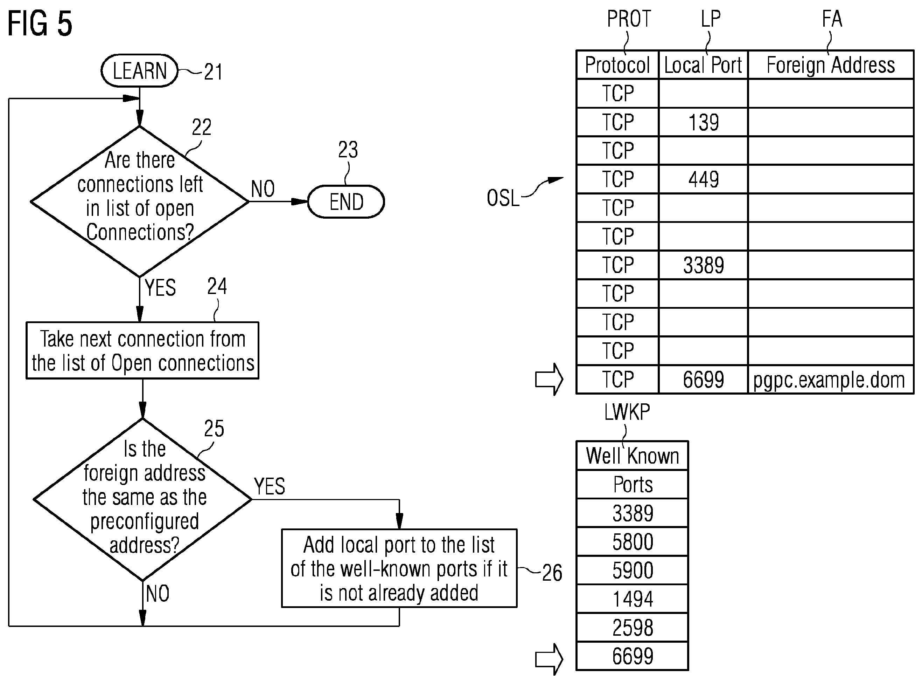

Figur 5 beschreibt den LEARN-Prozess 21:
Wenn der Benutzer, wie oben beschrieben, manuell die Remote-Adresse konfiguriert hat, so bedeutet dies wahrscheinlich, dass der Benutzer eine Remote-Desktop-Software benutzt, die noch nicht bekannt ist - einen nicht-Standard (non-default)-Port oder ein unbekannt Remote Desktop-Protokoll. Dann wird das folgende Verfahren für die vorhandenen Netzwerkverbindungen des Computer die PC-basierte Engineering-Software ausgeführt wird ausgeführt:
   Bestimmen Sie die fremde Adresse der Verbindung
      - Wenn die ausländische Adresse die gleiche wie die manuell konfigurierte Adresse ist, fügen Sie den Anschluss an die Liste der bekannten Ports WLPL.

Auf diese Weise kann die Software lernen, dass der Benutzer eine andere Software für die Verbindung zum Engineering-System verwendet, beim nächsten Mal SCAN-Prozess ausgeführt wird.

Die Software nutzt scheinbar nicht in Zusammenhang stehende Informationen (Informationen über die wohlbekannten Ports für Remote-Desktop-Verbindungen)um eine Vermutung über die richtige Konfigurationsparameter für die Softwarekomponente anzustellen, die für die Tunnelung der Automatisierungsprotokolle zuständig ist. Die Software kann auch im Lauf der Zeit von erfolgreichen Verbindungen lernen, zuvor unbekannt Remote-Desktop-Software etc. zu erkennen.

Eine Heuristik ist dabei allgemein eine Bewertung, welche durch eine Berechnung ermittelt wird. Diese Berechnung basiert auf Schätzen, Beobachten, Vermutungen oder Raten. Heuristiken dienen der Problemlösung, z. B. bei der Suche wird eine Heuristik genommen, um einen "guten" Weg oder eine "gute" Lösung zu finden. Die Bewertung ist nur so gut wie die "Schätzung". Heuristiken kommen immer dann zum Einsatz, wenn eine exakte Berechnung der optimalen Lösung unmöglich ist (z. B. zu wenige Informationen) oder derartig aufwendig, dass es sich nicht lohnt.

Die Konfiguration erfolgt gemäß des erfindungsgemäßen Verfahrens in den meisten Fällen vollständig automatisiert.

## Patentansprüche

1. Verfahren zum Konfigurieren einer Kommunikation zwischen einem ersten Computer (RC) mit einer Engineering-Software, welcher mit einen zweiten Computer (PC) kommuniziert, der in einem proprietären Automatisierungsnetzwerk (AN) angeschlossen ist,
wobei der erste Computer (RC) in einer Cloud-Umgebung läuft und wobei die Kommunikation zwischen dem ersten und dem zweiten Computer mittels eines Tunnel-Protokolls (TUNNEL) erfolgt,
**dadurch gekennzeichnet, dass**
die Konfiguration der Tunnelverbindung automatisiert mittels heuristisch ermittelten Informationen konfiguriert wird.

2. Verfahren gemäß Patentanspruch 1,
**dadurch gekennzeichnet, dass** als Tunnel-Protokoll https verwendet wird.

3. Verfahren gemäß einem der vorherigen Patentansprüche,
**dadurch gekennzeichnet, dass**
der erste Computer (RC) eine erste Information hat zu bekannten Kommunikationsverbindungen (WKPL).

4. Verfahren gemäß einem der vorherigen Patentansprüche,
**dadurch gekennzeichnet, dass**
in die ersten Informationen (WKPL) Port Nummern (LP) enthalten und zu der Port Nummer eine externe Adresse (FA) ermittelt wird, wobei diese Adresse eine IP Adresse und/oder ein DNS Name ist.

5. Verfahren gemäß einem der vorherigen Patentansprüche,
**dadurch gekennzeichnet, dass**
die ersten Informationen (WKPL) keine Informationen enthalten zu einer existierenden Kommunikationsverbindung, und
die zur existierenden Kommunikationsverbindung zugehörigen Kommunikationsinformationen, insbesondere IP-Adresse und/oder DNS Name den ersten Informationen zugefügt werden.
